# EUROPÄISCHE PATENTSCHRIFT

(11) **EP 4 649 287 B1**
(45) Veröffentlichungstag und Bekanntmachung des Hinweises auf die Patenterteilung: **09.09.2026**
(21) Anmeldenummer: 24727679.3
(22) Anmeldetag: 16.05.2024
(51) Int. Cl.: G01D 11/24

(54) **SENSOR FÜR DIE PROZESS- UND AUTOMATISIERUNGSTECHNIK**
SENSOR FOR PROCESS AND AUTOMATION TECHNOLOGY
CAPTEUR POUR LA TECHNOLOGIE DES PROCESSUS ET DE L'AUTOMATISATION

(30) Priorität: 25.05.2023 DE 102023113806
(43) Veröffentlichungstag der Anmeldung: 19.11.2025
(73) Patentinhaber: ifm electronic gmbh, 45128 Essen (DE); Autosen GmbH, 45130 Essen (DE)
(72) Erfinder: KATHAN, Benno, 88079 Kressbronn (DE); BONK, Konrad, 45131 Essen (DE); HEINRICH, Jürgen, 83026 Rosenheim (DE); KNÖRLE, Alexander, 88339 Bad Waldsee (DE)
(74) Vertreter: Ifm Patentabteilung
(86) Internationale Anmeldenummer: PCT/EP2024/063513
(87) Internationale Veröffentlichungsnummer: WO 2024/240584

(56) Entgegenhaltungen:
- DE-A1- 102016 008 517
- DE-U1- 202005 006 379
- US-A1- 2017 102 606

## Beschreibung

Die Erfindung betrifft einen Sensor für die Prozess- und Automatisierungstechnik, der aus zumindest zwei Einzelmodulen besteht, die jeweils ein eigenes Gehäuse umfassen und lösbar miteinander verbunden sind.

Ein Sensor bzw. Messgerät für die Prozess- und Automatisierungstechnik dient der Erfassung einer physikalischen Größe und umfasst im Wesentlichen ein Sensorelement, eine Elektronikeinheit zur Auswertung und/oder Verarbeitung der vom Sensorelement generierten Messsignale und eine elektrische Schnittstelle, über die das Messgerät mit Energie versorgt wird und die generierten Messsignale von einer übergeordneten Steuereinheit abgreifbar sind.

Das Sensorelement, auch als Messwertaufnehmer bezeichnet, dient zur Erfassung und Umwandlung einer physikalischen Messgröße eines Prozesswerts in ein Messsignal. In der Prozesstechnik dient der Messwertaufnehmer insbesondere zur Erfassung von Druck, Temperatur, Strömung bzw. Durchfluss oder Füllständen eines Mediums in einem Behälter. Darüber hinaus gibt es in der Automatisierungstechnik noch weitere Anwendungen, wobei hier beispielhaft optische, kapazitive und induktive Näherungsschalter bzw. -sensoren sowie Schwingungsüberwachungen genannt werden.

Bei bestimmten Anwendungen hat sich der Bedarf ergeben, zumindest die genannten Einzelmodule Sensorelement und Elektronikeinheit räumlich zu trennen, wie bspw. aus der DE 10 2018 121 463 A1 der Anmelderin bekannt. Entsprechend ist für jedes Einzelmodul auch ein separates Gehäuse vorzusehen. Für den Fall, dass diese Einzelmodule nicht entfernt voneinander anzuordnen sind, sondern separiert, aber trotzdem zusammen als ein kompakter Gesamtsensor verbunden sein sollen, müssen die Gehäuse der Einzelmodule sicher und fest miteinander verbunden werden.

Das Dokument US 2017/102606 A1 beschreibt eine Sensoranordnung mit zwei Einzelmodulen, die jeweils ein eigenes Gehäuse umfassen, welche über kongruente Grundflächen stirnseitig lösbar miteinander verbunden werden können.

Aufgabe der Erfindung ist es, die Einzelmodule eines mehrteiligen Sensors bzw. deren Gehäuse auf einfache Weise fest und lösbar miteinander zu verbinden.

Die Aufgabe wird erfindungsgemäß durch einen Sensor mit den Merkmalen des Anspruchs 1 gelöst. Vorteilhafte Ausgestaltungen der Erfindung sind in den Unteransprüchen angegeben.

Erfindungsgemäß sind zunächst die Gehäuse der Einzelmodule mit kongruenten Grundflächen ausgebildet, so dass sie stirnseitig derart miteinander verbunden werden können, dass der Sensor insgesamt eine kompakte Kontur aufweist. Die Grundfläche eines Gehäuses weist eine ringförmige Erhebung und die Grundfläche des anderen Gehäuses eine dazu komplementäre ringförmige Vertiefung auf. Wenn beide Einzelmodule und damit ihre Gehäuse miteinander verbundenen sind, greift die ringförmige Erhebung und die Vertiefung ineinander und sind somit in einem gewissen Bereich verdrehbar zueinander.

Die lösbare Verbindung beider Einzelmodule bzw. beider Gehäuse wird durch einen Verriegelungsmechanismus hergestellt, der durch wenigstens eine außenumfänglich an der ringförmigen Erhebung des ersten Gehäuses angeordnete radiale Ausbuchtung und eine dazu komplementäre Einbuchtung an der ringförmigen Vertiefung des zweiten Gehäuses gebildet wird. Vorzugsweise sind die radiale Ausbuchtung sowie die dazu komplementäre Einbuchtung sägezahnartig oder bolzenartig ausgeführt. Eine Verriegelung und damit eine axiale Fixierung beider Einzelmodule wird dadurch erreicht, dass die Einbuchtung eine Hinterschneidung aufweist, in die die radiale Ausbuchtung durch gegenseitiges Verdrehen der beiden Gehäuse eingreift.

Erfindungswesentlich ist darüber hinaus, dass in der ringförmigen Vertiefung des zweiten Gehäuses ein elastisches Dichtelement, bspw. ein O-Ring, zum Abdichten beider Gehäuse angeordnet ist. Neben der Dichtfunktion erfüllt das Dichtelement eine zweite, wesentliche Funktion, indem durch die infolge des Zusammenfügens beider Gehäuse bzw. Einzelmodule eintretende Berührung mit der ringförmigen Erhebung des ersten Gehäuses dieser Dichtring eine Vorspannung erfährt, wodurch die wenigstens eine Ausbuchtung in axialer Richtung gegen die Wandung der Einbuchtung gedrückt wird. Der Dichtring erfährt dabei eine elastische Verformung, jedoch keine Komprimierung und entwickelt infolgedessen eine Rückstellkraft. Im Ergebnis sind durch eine einfache Steck-Dreh-Bewegung mit sehr kleiner Verdrehbewegung von ca. 10° beide Gehäuse gleichzeitig form- und reibschlüssig miteinander verbindbar. D.h. das Dichtelement erzeugt beim Zusammensetzen der beiden Gehäuse den erforderlichen Anpressdruck für den Verriegelungsmechanismus und ermöglicht dadurch, trotz einer kleinen Verdrehbewegung von nur wenigen Grad eine feste und lösbare Verbindung.

Darüber hinaus erfüllt das Dichtelement eine dritte Funktion, indem es dämpfend und damit schockabsorbierend wirkt.

Auch wenn die Ausbuchtung sowie die dazu komplementäre Einbuchtung vorzugsweise als sägezahnartig oder bolzenartig beschrieben wird, sind von der Erfindung grundsätzlich alle Ausgestaltungen umfasst, die dazu geeignet sind, durch Hineinbewegen in die Hinterschneidung eine Verriegelung und damit eine axiale Fixierung beider Einzelmodule herzustellen.

Vorteilhafterweise wird der Verriegelungsmechanismus durch vier, bevorzugt um 90° versetzte radiale Ausbuchtungen und dazu komplementäre Einbuchtungen gebildet. Besonders vorteilhaft ist dabei, eine Mischung aus sägezahnartigen und bolzenartigen Ausbuchtungen vorzusehen. So lässt sich auf einfache Weise eine Codierung vorsehen, durch die die beiden Gehäuse nur in einer bestimmten Position zueinander zusammengefügt werden können.

Eine weitere vorteilhafte Weiterbildung sieht vor, dass das erste Gehäuse eine zweite Ausbuchtung aufweist, die durch die Steck-Dreh-Bewegung einen Schnapphaken am zweiten Gehäuse radial nach außen drückt und dadurch ein Rastmechanismus gebildet wird. Auf diese Weise wird ein leichtes Lösen des Verriegelungsmechanismus verhindert, da erst der Widerstand des Schnapphakens überwunden werden muss, um eine umgekehrte Bewegung durchzuführen.

Bevorzugt sind die Gehäuse beider Module quaderförmig ausgebildet, so dass der Sensor insgesamt eine kompakte, quaderförmige Kontur aufweist.

Bei einer weiteren bevorzugten Ausführungsform sind die Grundflächen der Gehäuse quadratisch ausgestaltet, wobei besonders bevorzugt die wenigstens eine Einbuchtung in einer Ecke bzw. die vier Einbuchtungen in den Ecken der quadratischen Grundfläche angeordnet ist bzw. sind. Auf diese Weise können die Grundflächen der Gehäuse bei einer vergleichsweise dünnen Wandstärke im Bereich der Seitenflächen optimal ausgenutzt werden und die Konturen weitestgehend minimiert werden, was im Hinblick auf eine kompakte Bauform vorteilhaft ist. Darüber hinaus ist die Anordnung der Einbuchtungen in den Ecken auch deswegen vorteilhaft, da an diesen Stellen die Seitenflächen orthogonal zueinander stehen und die Konstruktion deswegen dort am steifsten ist.

Nachfolgend wird die Erfindung anhand von Ausführungsbeispielen unter Bezugnahme auf die Zeichnungen näher erläutert.

Es zeigen schematisch:
- Figur 1: eine Explosionsdarstellung des erfindungsgemäßen Sensors, bestehend aus drei Einzelmodulen;
- Figur 2: ein erstes Einzelmodul aus der Darstellung von Fig. 1;
- Figur 3: ein zweites Einzelmodul aus der Darstellung von Fig. 1;
- Figur 4: eine Gesamtdarstellung des erfindungsgemäßen Sensors im Schnittbild
- Figur 5: Verbindung zweier Einzelmodule mit Rastmechanismus;
- Figur 6a: Detaildarstellung des Rastmechanismus im offenen Zustand und
- Figur 6b: Detaildarstellung des Rastmechanismus im geschlossenen Zustand.

Bei der nachfolgenden Beschreibung der bevorzugten Ausführungsformen bezeichnen gleiche Bezugszeichen gleiche oder vergleichbare Komponenten.

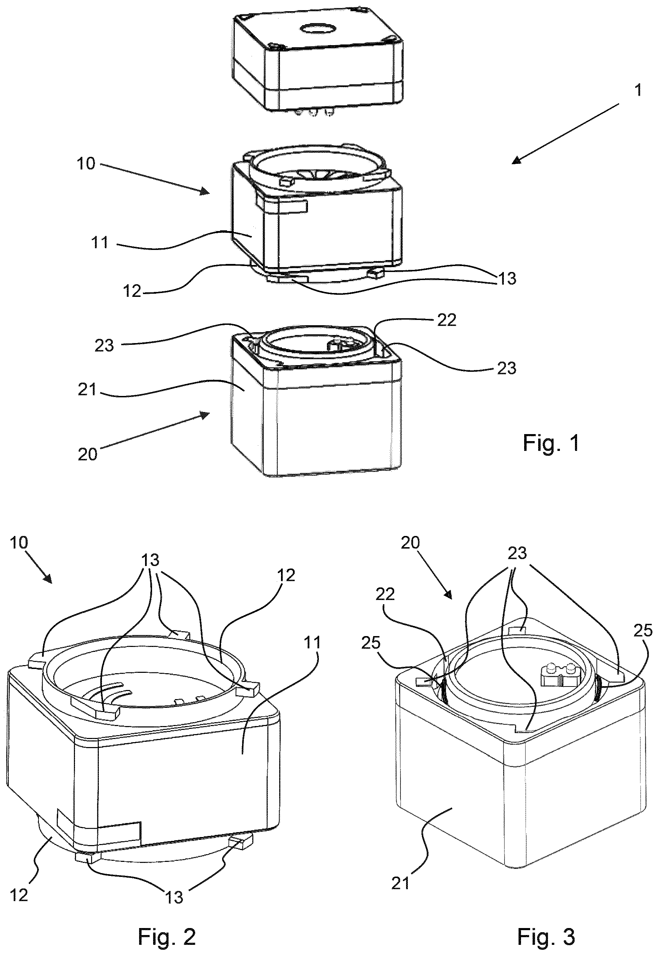

Figur 1 zeigt eine Explosionsdarstellung des erfindungsgemäßen Sensors 1, bestehend aus insgesamt drei Einzelmodulen 10, 20. Grundsätzlich geht die Erfindung zunächst von zwei Einzelmodulen 10, 20 aus, wobei sich der Erfindungsgedanke jedoch auf beliebig viele Einzelmodulen erweitern lässt.

Jedes Einzelmodulen 10, 20 besteht aus einem quaderförmigen Gehäuse 11, 21 mit kongruenten Grundflächen. Die Einzelmodule 10, 20 können somit stirnseitig so miteinander verbunden werden, dass der Sensor 1 insgesamt eine kompakte, quaderförmige Kontur aufweist. Sowohl die obere als auch die untere Grundfläche des mittleren Gehäuses 11 weist jeweils eine ringförmige Erhebung 12 und die Grundfläche des unteren Gehäuses 21 eine dazu komplementäre ringförmige Vertiefung 22 auf. Wenn beide Einzelmodule 10, 20 und damit ihre Gehäuse 11, 21 miteinander verbundenen sind, greift die ringförmige Erhebung 12 und die Vertiefung 22 ineinander und sie sind somit in einem gewissen Bereich zueinander verdrehbar.

Als Verriegelungsmechanismus für die lösbare Verbindung beider Einzelmodule 10, 20 bzw. beider Gehäuse 11, 21 sind am mittleren Gehäuses 11 vier außenumfänglich an der ringförmigen Erhebung 12 angeordnete radiale Ausbuchtungen 13 und vier dazu komplementäre Einbuchtung 23 an der ringförmigen Vertiefung 22 des unteren Gehäuses vorgesehen. In den folgenden Abbildungen wird dies nochmals vergrößert dargestellt.

In den Figuren 2 und 3 sind beiden Einzelmodule 10, 20 jeweils einzeln und gegenüber Fig. 1 vergrößert dargestellt. Deutlich zu erkennen ist in Fig. 2 die ringförmige Erhebung 12 und die daran außenumfänglich angeordneten radialen Ausbuchtungen 13, wobei bei den vier Ausbuchtungen 13 zwei sägezahnartig und zwei bolzenartig ausgeführt sind. Dementsprechend sind die dazu komplementären Einbuchtungen 23 im Bereich der ringförmigen Vertiefung 22 in Fig. 3 dargestellt. Durch die unterschiedliche Ausführung der Ausbuchtungen 13 und Einbuchtungen 23 lässt sich eine Codierung realisieren, durch die die beiden Gehäuse 11, 21 nur in einer bestimmten Position zueinander zusammengefügt werden können. Das ist bspw. für die richtige elektrische Kontaktierung zwischen den beiden Einzelmodulen 10, 20 wichtig. In den Fig. 2 und 3 sind jeweils innerhalb der ringförmigen Erhebung 12 bzw. der ringförmigen Vertiefung 22 elektrische Kontaktierelemente dargestellt, so dass sichergestellt sein muss, dass diese auch nach dem Zusammenfügen der beiden Einzelmodule 10, 20 auch galvanisch miteinander verbinden sind.

Die Grundflächen der Gehäuse 11, 21 bzw. Einzelmodule 10, 20 sind quadratisch ausgestaltet und die Einbuchtungen 23 in den Ecken der quadratischen Grundfläche angeordnet. Auf diese Weise können die Grundflächen der Gehäuse 11, 21 bei einer vergleichsweise dünnen Wandstärke im Bereich der Seitenflächen beim zweiten Einzelmodul 20 (siehe Fig. 3) optimal ausgenutzt werden und die Konturen weitestgehend minimiert werden, was im Hinblick auf eine kompakte Bauform vorteilhaft ist. Darüber hinaus ist die Anordnung der Einbuchtungen in den Ecken auch deswegen vorteilhaft, da an diesen Stellen die Seitenflächen orthogonal zueinander stehen und die Konstruktion deswegen dort am steifsten ist.

Die Verriegelung und damit eine axiale Fixierung beider Einzelmodule 10, 20 wird dadurch erreicht, dass die Einbuchtungen 23 jeweils eine Hinterschneidung aufweisen, in die die radiale Ausbuchtung 13 durch gegenseitiges Verdrehen der beiden Gehäuse 11, 21 eingreift. In Fig. 3 ist diese Hinterschneidung zu erkennen. Wesentlich ist darüber hinaus ein in der ringförmigen Vertiefung 22 angeordnetes elastisches Dichtelement 25, das bspw. als ein O-Ring ausgeführt sein kann. Dieses Dichtelement 25 dient zum einen dem Abdichten der beiden Einzelmodule 10, 20. Neben der Dichtfunktion erfüllt das Dichtelement 25 eine zweite, wesentliche Funktion, indem durch die infolge des Zusammenfügens beider Gehäuse 11, 21 bzw. Einzelmodule 10, 20 eintretende Berührung mit der ringförmigen Erhebung 12 dieses Dichtelement 25 eine Vorspannung erfährt, wodurch die wenigstens eine Ausbuchtung 13 in axialer Richtung gegen die Wandung der Einbuchtung 23 gedrückt wird. Im Ergebnis sind durch eine einfache Steck-Dreh-Bewegung mit sehr kleiner Verdrehbewegung von ca. 10° beide Gehäuse 11, 21 bzw. Einzelmodule 10, 20 gleichzeitig form- und reibschlüssig miteinander verbindbar. Das Dichtelement 25 erzeugt beim Zusammensetzen der beiden Einzelmodule 10, 20 den erforderlichen Anpressdruck für den Verriegelungsmechanismus und ermöglicht dadurch, trotz einer kleinen Verdrehbewegung von nur wenigen Grad eine feste und lösbare Verbindung.

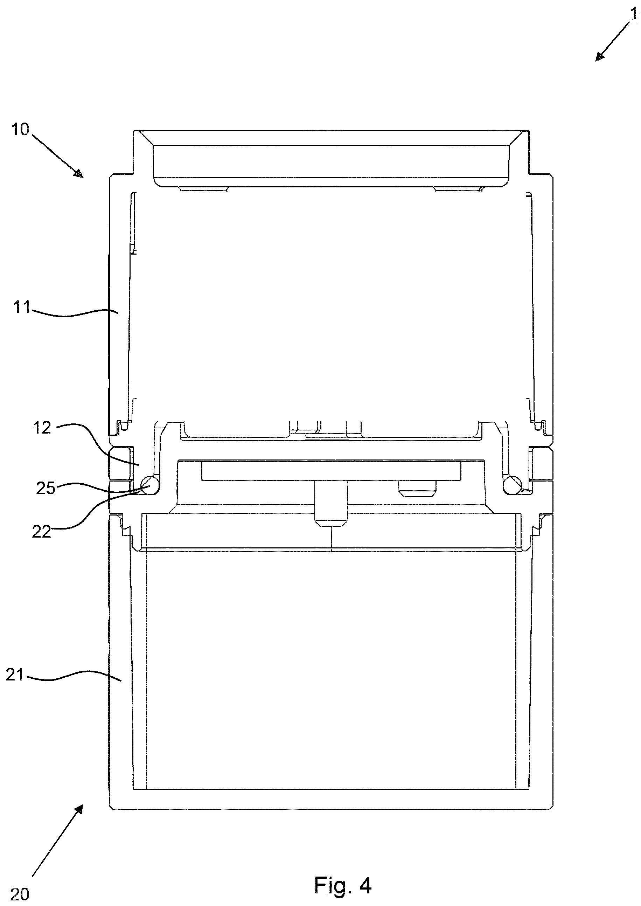

Figur 4 zeigt eine Gesamtdarstellung des erfindungsgemäßen Sensors 1 im zusammengefügten Zustand der Einzelmodule 10, 20. Deutlich machen soll diese Darstellung insbesondere die Position des Dichtelements 25 in der ringförmigen Vertiefung 22 und die sich auf dem Dichtelement 25 abstützende ringförmige Erhebung 12. Aufgrund des Schnitts im Bereich der Seitenflächen ist der Verriegelungsmechanismus selbst in Fig. 4 nicht zu sehen.

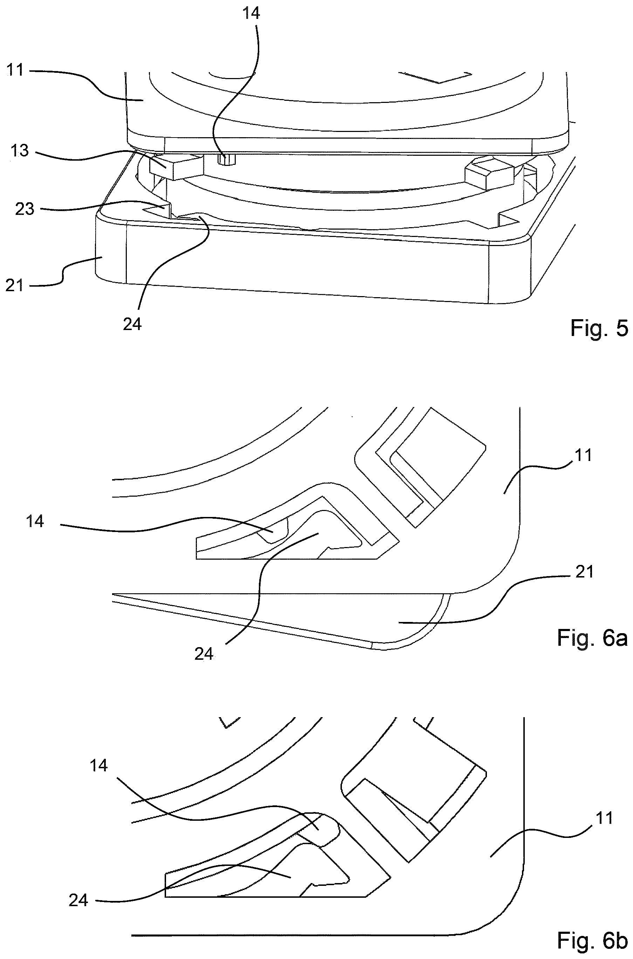

In Figur 5 ist der Rastmechanismus als bevorzugte Ausführungsform des erfindungsgemäßen Sensors 1 darstellt. Neben dem bereits erläuterten Verriegelungsmechanismus, bestehend aus der Ausbuchtung 13 und der Einbuchtung 23 befindet sich am oberen Gehäuse 11 noch eine weitere Ausbuchtung 14, die sich axial in Richtung des unteren Gehäuses 21 erstreckt.

Wie aus den Darstellungen der Figuren 6a und 6b ersichtlich ist, fährt diese weitere Ausbuchtung 14 während der Steck-Dreh-Bewegung über einen Schnapphaken 24 am unteren Gehäuse 21, wodurch dieser aufgrund seiner Elastizität radial nach außen gedrückt wird (siehe Fig. 6a). Wenn sich die Ausbuchtung 13 des Verriegelungsmechanismus in der Endposition im Bereich der Hinterschneidung befindet, hat die weitere Ausbuchtung 14 des Rastmechanismus den Schnapphaken 24 passiert, so dass der Schnapphaken 24 sich wieder in seine ursprüngliche Position zurückbewegt und dadurch so gegen die weitere Ausbuchtung 14 drückt (siehe Fig. 6b), dass sich diese und damit das gesamte obere Gehäuse 11 nicht mehr ohne Weiteres wieder aus der Verriegelungsposition zurückdrehen kann. Nur durch händischen Eingriff und das bewusste Überwinden eines gewissen Widerstands lassen sich die beiden Gehäuse 11, 21 wieder aus der Verriegelungsposition zurückdrehen und somit die Verbindung zwischen den Einzelmodulen 10, 20 lösen.

### Bezugszeichenliste

- 1: Sensor
- 10: erstes Einzelmodul
- 11: Gehäuse des ersten Einzelmoduls
- 12: ringförmige Erhebung
- 13: radiale Ausbuchtung
- 14: zweite Ausbuchtung
- 20: zweites Einzelmodul
- 21: Gehäuse des zweiten Einzelmoduls
- 22: ringförmige Vertiefung
- 23: Einbuchtung
- 24: Schnapphaken
- 25: elastisches Dichtelement

## Patentansprüche

1. Sensor für die Prozess- und Automatisierungstechnik, bestehend aus zumindest zwei Einzelmodulen (10, 20), die jeweils ein eigenes Gehäuse (11, 21) umfassen und lösbar miteinander verbunden sind,
wobei in einem ersten Modul (10) eine Sensoreinheit und in einem zweiten Modul (20) eine Elektronikeinheit angeordnet ist,
wobei die Gehäuse (11, 21) beider Module (10, 20) mit kongruenten Grundflächen ausgebildet sind, so dass sie stirnseitig derart miteinander verbunden werden können, dass der Sensor (1) eine kompakte Kontur aufweist,
wobei die Grundfläche eines ersten Gehäuses (11) eine ringförmige Erhebung (12) und die Grundfläche eines zweiten Gehäuses (21) eine dazu komplementäre ringförmige Vertiefung (22) aufweist, die beide im verbundenen Zustand des Sensors (1) ineinandergreifen,
wobei die lösbare Verbindung durch einen Verriegelungsmechanismus hergestellt wird, der durch wenigstens eine außenumfänglich an der ringförmigen Erhebung (12) des ersten Gehäuses (11) angeordnete radiale Ausbuchtung (13) und eine dazu komplementäre Einbuchtung (23) an der ringförmigen Vertiefung (22) des zweiten Gehäuses (21) gebildet wird, wobei die Einbuchtung (23) eine Hinterschneidung aufweist, in die die radiale Ausbuchtung (13) durch eine Steck-Dreh-Bewegung der beiden Gehäuse (11, 21) eingreift,
wobei in der ringförmigen Vertiefung (22) des zweiten Gehäuses (21) ein elastisches Dichtelement (25) zum Abdichten beider Gehäuse (11, 21) angeordnet ist, das darüber hinaus dazu eingerichtet ist, durch eine infolge der Steck-Dreh-Bewegung eintretende Berührung mit der ringförmigen Erhebung (12) des ersten Gehäuses (11) eine Vorspannung zu erfahren, wodurch die wenigstens eine Ausbuchtung (13) in axialer Richtung gegen die Wandung der Einbuchtung (23) gedrückt wird, so dass durch die Steck-Dreh-Bewegung beide Gehäuse (11, 21) gleichzeitig form- und reibschlüssig miteinander verbindbar sind.

2. Sensor nach Anspruch 1,
wobei die radiale Ausbuchtung (13) und die dazu komplementäre Einbuchtung (23) sägezahnartig oder bolzenartig ausgeführt sind.

3. Sensor nach einem der vorhergehenden Ansprüche,
wobei der Verriegelungsmechanismus durch vier radiale Ausbuchtungen (13) und dazu komplementäre Einbuchtungen (23) gebildet wird.

4. Sensor nach einem der vorhergehenden Ansprüche,
wobei das erste Gehäuse (11) eine zweite Ausbuchtung (14) aufweist, die durch die Steck-Dreh-Bewegung einen Schnapphaken (24) am zweiten Gehäuse (21) radial nach außen drückt und dadurch ein Rastmechanismus gebildet wird.

5. Sensor nach einem der vorhergehenden Ansprüche,
wobei die Gehäuse (11, 21) beider Module (10, 20) quaderförmig ausgebildet sind.

6. Sensor nach einem der vorhergehenden Ansprüche,
wobei die Grundflächen der Gehäuse (11, 21) quadratisch ausgestaltet sind.

7. Sensor nach Anspruch 6,
wobei die wenigstens eine Einbuchtung (23) in einer Ecke der quadratischen Grundfläche angeordnet ist.

8. Sensor nach einem der vorhergehenden Ansprüche,
wobei die Steck-Dreh-Bewegung der beiden Gehäuse (11, 21) 10° beträgt.

## Claims

1. A sensor for process and automation technology, consisting of at least two individual modules (10, 20), which each comprise their own housing (11, 21) and are releasably connected to each other,
wherein a sensor unit is arranged in a first module (10) and an electronics unit is arranged in a second module (20),
wherein the housings (11, 21) of the two modules (10, 20) are designed with congruent bases so that they can be connected to each other on an end face in such a way that the sensor (1) has a compact contour,
wherein the base of a first housing (11) has an annular protrusion (12) and the base of a second housing (21) has a complementary annular recess (22), the two of which interlock when the sensor (1) is connected,
wherein the releasable connection is established by a locking mechanism which is formed by at least one radial bulge (13) arranged on the outer circumference of the annular protrusion (12) of the first housing (11) and a complementary indentation (23) at the annular recess (22) of the second housing (21), wherein the indentation (23) has an undercut into which the radial bulge (13) engages by way of a push-and-twist movement of the two housings (11, 21),
wherein an elastic sealing element (25) is arranged in the annular recess (22) of the second housing (21) to seal the two housings (11, 21), which sealing element is also designed to be preloaded by contact with the annular protrusion (12) of the first housing (11) as a result of the push-and-twist movement, as a result of which the at least one bulge (13) is pressed in the axial direction against the wall of the indentation (23) such that the push-and-twist movement allows the two housings (11, 21) to be form-fittingly and frictionally connected to each other simultaneously.

2. The sensor according to claim 1,
wherein the radial bulge (13) and the complementary indentation (23) have a sawtooth-like or bolt-like design.

3. The sensor according to either of the preceding claims,
wherein the locking mechanism is formed by four radial bulges (13) and complementary indentations (23).

4. The sensor according to any of the preceding claims,
wherein the first housing (11) has a second bulge (14) which, as a result of the push-and-twist movement, presses a snap hook (24) on the second housing (21) radially outward, thereby forming a latching mechanism.

5. The sensor according to any of the preceding claims,
wherein the housings (11, 21) of the two modules (10, 20) are cuboid.

6. The sensor according to any of the preceding claims,
wherein the bases of the housings (11, 21) are square.

7. The sensor according to claim 6,
wherein the at least one indentation (23) is arranged in a corner of the square base.

8. The sensor according to any of the preceding claims,
wherein the two housings (11, 21) perform a 10° push-and-twist movement.

## Revendications

1. Capteur destiné à l'ingénierie des processus et de l'automatisation, constitué d'au moins deux modules individuels (10, 20) qui comprennent respectivement un boîtier (11, 21) qui leur est propre et sont reliés entre eux de manière amovible,
dans lequel une unité formant capteur est disposée dans un premier module (10) et une unité électronique est disposée dans un second module (20),
dans lequel les boîtiers (11, 21) des deux modules (10, 20) sont réalisés avec des surfaces de base congruentes, de sorte qu'ils peuvent être reliés entre eux par leurs faces frontales, de sorte que le capteur (1) présente un contour compact,
dans lequel la surface de base d'un premier boîtier (11) présente un renflement (12) annulaire et la surface de base d'un second boîtier (21) présente un renfoncement (22) annulaire complémentaire de celui-ci, lesquels s'emboîtent l'un dans l'autre à l'état relié du capteur (1),
dans lequel la liaison amovible est produite par un mécanisme de verrouillage qui est formé par au moins une saillie (13) radiale disposée sur la circonférence extérieure sur le renflement (12) annulaire du premier boîtier (11) et un évidement (23) complémentaire de celle-ci sur le renfoncement (22) annulaire du second boîtier (21), dans lequel l'évidement (23) présente une contre-dépouille dans laquelle la saillie (13) radiale vient en prise par un mouvement de poussée et de torsion des deux boîtiers (11, 21),
dans lequel un élément d'étanchéité (25) élastique est disposé dans le renfoncement (22) annulaire du second boîtier (21) afin d'assurer l'étanchéité entre les deux boîtiers (11, 21), lequel élément d'étanchéité est en outre conçu de manière à subir une précontrainte sous l'effet d'un contact avec le renflement (12) annulaire du premier boîtier (11) qui résulte du mouvement de poussée et de torsion, moyennant quoi l'au moins une saillie (13) est pressée dans la direction axiale contre la paroi de l'évidement (23), de sorte que, par le mouvement de poussée et de torsion, les deux boîtiers (11, 21) peuvent être reliés entre eux simultanément par complémentarité de forme et par friction.

2. Capteur selon la revendication 1,
dans lequel la saillie (13) radiale et l'évidement (23) complémentaire de celle-ci sont réalisés en forme de dents de scie ou de goujons.

3. Capteur selon l'une des revendications précédentes,
dans lequel le mécanisme de verrouillage est constitué de quatre saillies (13) radiales et d'évidements (23) complémentaires de celles-ci.

4. Capteur selon l'une des revendications précédentes,
dans lequel le premier boîtier (11) présente une seconde saillie (14) qui, sous l'effet du mouvement de poussée et de torsion, presse un crochet d'encliquetage (24) sur le second boîtier (21) radialement vers l'extérieur, formant ainsi un mécanisme d'encliquetage.

5. Capteur selon l'une des revendications précédentes,
dans lequel les boîtiers (11, 21) des deux modules (10, 20) sont réalisés sous forme parallélépipédique.

6. Capteur selon l'une des revendications précédentes,
dans lequel les surfaces de base des boîtiers (11, 21) sont conçues sous forme carrée.

7. Capteur selon la revendication 6,
dans lequel l'au moins un évidement (23) est disposé dans un coin de la surface de base carrée.

8. Capteur selon l'une des revendications précédentes,
dans lequel le mouvement de poussée et de torsion des deux boîtiers (11, 21) est de 10°.
